# EUROPÄISCHE PATENTSCHRIFT

(11) **EP 1 271 387 B1**
(45) Veröffentlichungstag und Bekanntmachung des Hinweises auf die Patenterteilung: **24.05.2006**
(21) Anmeldenummer: 02013743.6
(22) Anmeldetag: 20.06.2002
(51) Int. Cl.: G06K 13/08, G06K 7/00

(54) **Chipkartenleser mit verriegelbarem Schlitten**
Chipcard reader with lockable carriage
Lecteur de carte à puce avec chariot vérouillable

(30) Priorität: 20.06.2001 DE 10129580
(43) Veröffentlichungstag der Anmeldung: 02.01.2003
(73) Patentinhaber: AMPHENOL-TUCHEL ELECTRONICS GmbH, D-74080 Heilbronn (DE)
(72) Erfinder: Feeser, Reiner, 74080 Heilbronn (DE)
(74) Vertreter: Wagner & Geyer

(56) Entgegenhaltungen:
- EP-A- 0 923 042
- DE-A- 3 916 783
- DE-A- 3 931 508
- DE-C- 19 545 502
- DE-U- 9 213 283
- GB-A- 2 198 595

## Beschreibung

Die vorliegende Erfindung bezieht sich allgemein auf Chipkartenleser und insbesondere auf Chipkartenleser mit einem Kontaktträger und einem zwischen einer Ein-/Ausgabeposition und einer Lesestellung beweglichen Schlitten, wobei zur Verriegelung des Schlittens in der Leseposition ein Verriegelungsmechanismus vorgesehen ist

Aus der DE 39 31 508 A1 ist ein Chipkartenleser mit einem Kontaktträger und einer Kartenaufnahme bekannt, wobei die Kartenaufnahme im Kontaktträger derart hin- und herbeweglich gelagert ist, daß beim Einsetzen einer Chipkarte in die Kartenaufriahme diese zusammen mit der Karte zu den im Kontaktträger vorhandenen Kontakten hin bewegt oder abgesenkt wird.

Eine neuartige Anwendungsmöglichkeit für einen Chipkartenleser ist im Bereich von Fahrtenschreibern oder Tachographen für Lastkraftwagen (LKW). Zur Überwachung von Lastkraftwagen und deren Fahrern sind in Lastkraftwagen Fahrtenschreiber eingebaut, die Fahrzeiten und Geschwindigkeit des LKW aufzeichnen. Bisher waren die Fahrtenschreiber normalerweise so gestaltet, daß eine Papierscheibe in den Fahrtenschreiber eingelegt wurde und in analoger Weise die Geschwindigkeit des LKW im Verhältnis zur Zeit auf der Papierscheibe aufgezeichnet wurde. Diese herkömmlichen Fahrtenschreiber waren relativ leicht manipulierbar.

Um die Fahrtenschreiber zuverlässiger und sicherer zu machen, ist vorgesehen, daß neuartige Überwachungsgeräte verwendet werden, die nur sehr schwer oder überhaupt nicht manipuliert werden können und bei denen gegebenenfalls zusätzlich zu Fahrzeiten und gefahrenen Geschwindigkeiten auch weitere Daten aufgezeichnet werden können. Hierzu wird vorzugsweise eine Chipkarte zusammen mit den Überwachungsgeräten verwendet. Zum Lesen und Beschreiben der Chipkarte muß diese in einen Chipkartenleser eingeführt werden. Der Chipkartenleser kann separat vorgesehen sein oder einen Teil des Überwachungsgeräts bilden.

An einen solchen Chipkartenleser werden besondere Anforderungen gestellt. Er darf nicht manipulierbar sein. Dazu muß ein Entnehmen der Karte während der Benutzung zuverlässig verhindert werden. Ferner muß die Chipkarte auch bei Stößen, Schlägen und Erschütterungen sicher im Chipkartenleser gehalten werden. Solche Stöße, Schläge und Erschütterungen können beim normalen Betrieb des LKW auftreten oder bei einem Unfall, aber auch bei einem Manipulationsversuch. Außerdem muß der Chipkartenleser wegen der üblicherweise schmutzigen Umgebung in LKWs gegen Eindringen von Schmutz und Staub geschützt sein, insbesondere wenn keine Chipkarte eingelegt ist oder wenn eine verschmutzte Chipkarte eingelegt wird, an der beispielsweise Staubpartikel haften. Auch muß der Chipkartenleser gegen Manipulation ohne eingelegte Chipkarte gesichert sein. Darüberhinaus ist es wünschenswert, daß auch verbogene oder gewölbte Chipkarten zuverlässig im Chipkartenleser aufgenommen und gelesen werden können.

Neben der bereits einleitend genannten DE 39 31 508 A1 sei noch auf die DE 39 16 783 A1 hingewiesen. Letztere zeigt eine Lese- und Auswurfvorrichtung für Werteinheiten enthaltende Karten mit einer zur Aufnahme der Karte dienenden Schublade. Die Schublade ist manuell betätigbar und weist zwei Endstellungen auf. In der einen Endstellung ist das Einlegen oder die Entnahme einer Chipkarte möglich, während in der anderen Endstellung die Chipkarte durch eine Kontaktierungsvorrichtung für einen Benutzer unerreichbar an die Lese- und Schreibvorrichtung angeschlossen ist. Die Bewegung der Kontaktierungsvorrichtung wird mit Hilfe einer Feder und eines durch das Ende einer Nut mitgenommenen Stiftes zwangsweise an die Bewegung der Schublade gekoppelt.

Aus DE195 45 502 C1 ist ein Chipkartenleser gemäß dem Oberbegriff des Anspruchs 1 bekannt, bei dem der Schlitten an dessen Rückseite verriegelt wird, wobei die Verriegelung durch ein Druckelement in Form eines Bolzens gelöst werden kann.

Es ist daher die Aufgabe der vorliegenden Erfindung, einen Chipkartenleser zu schaffen, der die obigen Anforderungen erfüllt und die Nachteile des Standes der Technik vermeidet.

Diese Aufgabe wird erfindungsgemäß gelöst durch einen Chipkartenleser mit den Merkmalen des Anspruchs 1. Bevorzugte Ausführungsbeispiele der Erfindung ergeben sich aus den Unteransprüchen.

Insbesondere ist ein Chipkartenleser mit einem Kontaktträger und einem zwischen einer Ein-/Ausgabeposition und einer Lesestellung beweglichen Schlitten vorgesehen, wobei an einer Seite des Chipkartenlesers eine Karteneinschuböffnung vorgesehen ist und wobei zur Verriegelung des Schlittens in der Leseposition ein Verriegelungsmechanismus vorgesehen ist, welcher an einem der Karteneinschuböffnung entgegengesetzten Ende des Chipkartenlesers angeordnet ist.

Vorzugsweise ist der Verriegelungsmechanismus nur vom der Karteneinschuböffnung entgegengesetzten Ende des Chipkartenlesers aus betätigbar, um unbefugte Manipulationen zu vermeiden.

Zur erhöhten Stoß- und Schlagsicherheit ist vorzugsweise vorgesehen, daß der Verriegelungsmechanismus an zwei Stellen am Schlitten angreift. Insbesondere kann der Verriegelungsmechanismus eine Haltefeder mit zwei spiegelsymmetrisch angeordneten Rasthaken aufweisen.

Gemäß einer bevorzugten Ausführungsform ist der Schlitten geeignet, eine Chipkarte im wesentlichen vollständig aufzunehmen, um dadurch in der Lesestellung eine integrierte Kartensperre zu bilden.

Der Schlitten weist eine Kartenauflagefläche auf, wobei sich der Schlitten bei einer Bewegung von der Ein-/Ausgabeposition in die Lesestellung vorzugsweise sowohl in einer Richtung parallel zur Kartenauflagefläche als auch in einer Richtung senkrecht dazu bewegt. In anderen Worten wird der Schlitten bei seiner Bewegung zwischen Ein-/Ausgabeposition und Lesestellung und umgekehrt angehoben bzw. abgesenkt.

Gemäß einer besonders bevorzugten Ausführungsform ist der Verriegelungsmechanismus durch ein externes Druckelement lösbar oder betätigbar, und zwar vorzugsweise durch einen Bolzen, welcher in den Chipkartenleser bewegbar ist, und zwar insbesondere in Richtung zur Karteneinschuböffnung hin.

Vorzugsweise weist der Verriegelungsmechanismus ein Blattfederelement auf, das durch den Bolzen elastisch verbiegbar ist, um das Lösen des Verriegelungsmechanismus' zu bewirken.

Zum leichteren Einlegen oder Einführen einer Chipkarte kann der Kontaktträger im Bereich der Karteneinschuböffnung eine Kartenführung zur Führung der Längsseitenkanten sowie die Hauptseiten der Chipkarte aufweisen.

Beim erfindungsgemäßen Chipkartenleser ist zwischen dem Kontaktträger und dem Schlitten ein Kartenschacht gebildet, in den Kontaktkuppen von Kontaktelementen ragen, wobei der Schlitten vorzugsweise eine Kartenzwangsführung in Form von mindestens einer Rampe aufweist, um die Chipkarte beim Einführen derselben in den Kartenschacht an den Kontaktkuppen vorbeizuführen, um einen Schleifkontakt zwischen den Kontaktkuppen und der Chipkarte zu vermeiden.

Um Eindringen von Schmutz in den Kartenschacht zu vermeiden weist der Chipkartenleser vorzugsweise in einem Bereich nahe der Karteneinschuböffnung eine Schmutzsperre auf, die im wesentlichen aus einer Klappe besteht, die um eine Schwenkachse herum in den Kartenschacht schwenkbar ist, so daß die Klappe den Kartenschacht verschließt, wobei beim Einlegen einer Chipkarte die Klappe aus dem Kartenschacht schwenkbar ist.

Vorzugsweise ist der Chipkartenleser auf einer Leiterplatte anbringbar. Dabei kann der Kontaktträger Abstandsdome oder Distanzbolzen aufweisen, damit zwischen Chipkartenleser und der Leiterplatte Bauelemente angeordnet werden können.

Es wird also erfindungsgemäß ein Chipkartenleser vorgesehen, der eine Chipkarte schock- und vibrationssicher verriegelt und gegen sichtbare Manipulation schützt. Es ist ein einfacher, effektiver Schutz vor Manipulation gegeben. Das Eindringen von Schmutz in den Kartenschacht ist gering. Die Lebensdauer der Lesekontakte ist hoch. Die Karte wird im eingesteckten Zustand großflächig gehalten. Die Entriegelung erfolgt unzugänglich (geschützt) von hinten. Durch Abstandsdome oder Distanzbolzen wird Platz für zusätzliche Bauelemente auf der Leiterplatte erreicht. Der Anschluß des Chipkartenlesers an eine Leiterplatte erfolgt durch Lötpin, altenativ durch Andruckkontakte. Die Chipkarte wird beim Einschieben in den Chipkartenleser angehoben (Landing Card) mit gleichzeitiger Kartensperre. Anhebung und Sperre bilden ein Element. Es ist eine Haltefeder mit zwei Rasthaken vorgesehen gegenüber dem Stand der Technik, welcher nur ein Rastelement (Hebel) vorsieht. Durch spiegelsymmetrische Anordnung der Rastelemente ergibt sich eine schocksichere Verrastung. Insbesondere ist eine schock- und vibrationssichere Kartenverriegelung durch eine Haltefeder mit zwei spiegelsymmetrisch angeordneten Rasthaken vorgesehen. Karten, die über die ISO 7810 hinaus gewölbt sind, werden im Leser sicher geführt, gehalten und wieder ausgeworfen aufgrund der großen Karteneinschuböffnung und der Gesamthöhe des Kartenschachts in der Ein-/Ausgabeposition. Durch das Anheben des Schlittens wird die Karte auf der Kontaktseite angedrückt und zusätzlich gerichtet. Durch den Chipkartenleser wird eine Massereduzierung und eine Reduzierung der Schockempfindlichkeit am Rastelement erreicht.

Weitere Vorteile und Einzelheiten der Erfindung ergeben sich aus der folgenden Beschreibung bevorzugter Ausführungsbeispiele anhand der Zeichnung; in der Zeichnung zeigt:
- Fig. 1: eine perspektivische Ansicht eines Chipkartenlesers gemäß der vorliegenden Erfindung, von unten gesehen, in einer Auslöseposition;
- Fig. 2: eine Draufsicht auf den Chipkartenleser gemäß Fig. 1, von unten gesehen, in einer Ein-/Ausgabeposition;
- Fig. 3: eine perspektivische Ansicht des Chipkartenlesers gemäß Fig. 1 oder 2, von oben gesehen, in einer Lesestellung;
- Fig. 4: eine Detailansicht des Chipkartenlesers gemäß Fig. 1 bis 3, von unten gesehen, in der Ein-/Ausgabeposition, wobei Einzelheiten der Verriegelung erkennbar sind;
- Fig. 5: ist eine Detailansicht ähnlich Fig. 4 in einer Verrastposition;
- Fig. 6: ist eine Detailansicht ähnlich Fig. 4 oder 5 in einer Auslöseposition;
- Fig. 7: ist eine Schnittansicht des Lesers gemäß Fig. 1 bis 6 in einer Ein-/Ausgabeposition;
- Fig. 8: eine Schnittansicht ähnlich Fig. 7 in einer ersten Zwischenposition;
- Fig. 9: eine Schnittansicht ähnlich Fig. 7 oder 8 in einer zweiten Zwischenposition;
- Fig. 10: eine Schnittansicht ähnlich Fig. 7 bis 9 in der Lesestellung;
- Fig. 11: eine perspektivische Ansicht eines weiteren Ausführungsbeispiels des Chipkartenlesers gemäß der vorliegenden Erfindung von unten gesehen, wobei der Kartenschlitten entfernt ist;
- Fig. 12: eine perspektivische Ansicht des Chipkartenlesers gemäß Fig. 11, mit Kartenschlitten, in einer Verrastposition;
- Fig. 13: eine perspektivische Ansicht des Chipkartenlesers ähnlich Fig. 12 in einer Ein-/Ausgabeposition;
- Fig. 14: eine perspektivische Ansicht des Chipkartenlesers ähnlich Fig. 11, ohne Kartenschlitten, in einer Auslöseposition, wobei eine Chipkarte gezeigt ist;
- Fig. 15: eine perspektivische Detailansicht eines Chipkartenlesers gemäß dem Ausführungsbeispiel der Fig. 11-14, von oben gesehen;
- Fig. 16: eine perspektivische Detailansicht eines Chipkartenlesers gemäß dem Ausführungsbeispiel der Fig. 11-14, von unten gesehen, in einer Verrastposition; und
- Fig. 17: ein Ansicht ähnlich Fig. 16, in einer Auslöseposition.

Die im wesentlichen übereinstimmenden Merkmale des Chipkartenlesers werden in allen Figuren mit den gleichen Bezugszeichen bezeichnet. Ähnliche Merkmale werden mit den gleichen Bezugszeichen, aber mit Apostroph versehen, bezeichnet; und unterschiedliche Merkmale werden mit unterschiedlichen Bezugszeichen bezeichnet.

Die vorliegende Erfindung betrifft einen Chipkartenleser 1, welcher einen Rahmen oder Kontaktträger 2 und einen Schlitten 3 aufweist. Die Grundstruktur des Chipkartenlesers 1 ist derart, daß der Kontaktträger 2 einen im wesentlichen rechteckigen Hauptkörper mit vorstehenden Seitenwänden aufweist, die einen Raum definieren, in den der Schlitten 3 eingesetzt werden kann. Der Schlitten 3 besitzt im wesentlichen ebenfalls einen insgesamt etwa rechteckigen Hauptkörper mit Seitenwänden, die dazwischen einen Raum definieren. Der Kontaktträger 2 und der Schlitten 3 werden so ineinandergesetzt, daß die durch die jeweiligen Seitenwände gebildeten Räume zueinander weisen. In den Figuren ist der Chipkartenleser 1 so dargestellt, daß er von unten an einer Leiterplatte (nicht gezeigt) angebracht werden kann. In dieser Position ist der Kontaktträger 2 "oben" und der Schlitten 3 "unten". Die nachfolgende Beschreibung ist auf diese Orientierung bezogen. Jedoch sei bemerkt, daß die relative Position nur zur leichteren Bezugnahme gewählt wurde und der Chipkartenleser 1 in jeglicher anderen Orientierung verwendet werden könnte, beispielsweise oben auf einer Leiterplatte angebracht, so daß der Kontaktträger 2 "unten" und der Schlitten 3 "oben" wäre. Ferner ist in der nachfolgenden Beschreibung mit "vorn" die Seite oder das Ende des Chipkartenlesers 1 bezeichnet, von der bzw. dem aus eine Chipkarte 4 in den Chipkartenleser 1 eingelegt wird, wohingegen mit "hinten" die Seite oder das Ende bezeichnet wird, die bzw. das entgegengesetzt zu der "vorderen" Seite oder dem "vorderen" Ende angeordnet ist.

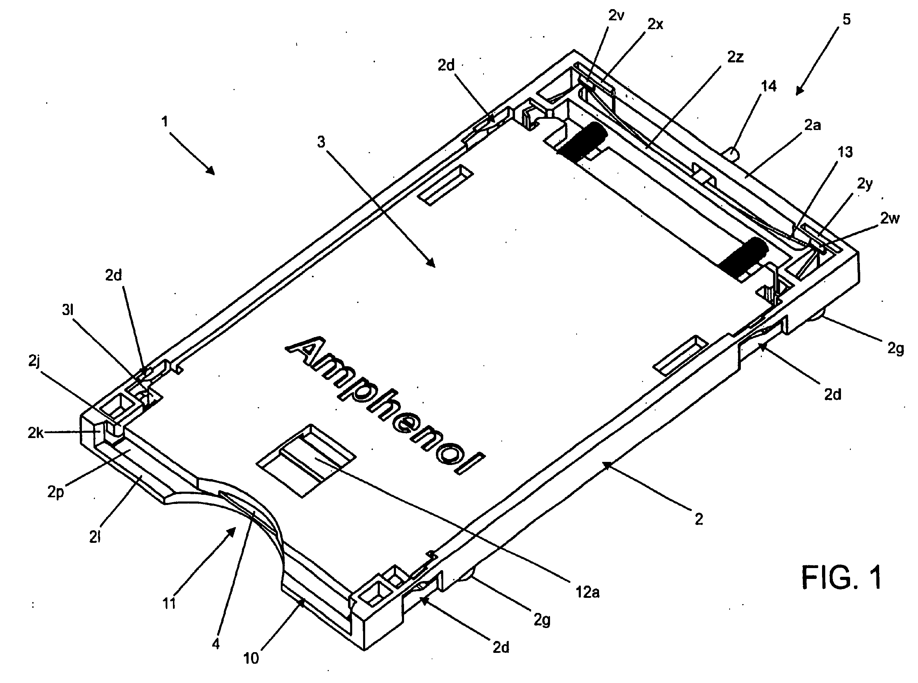

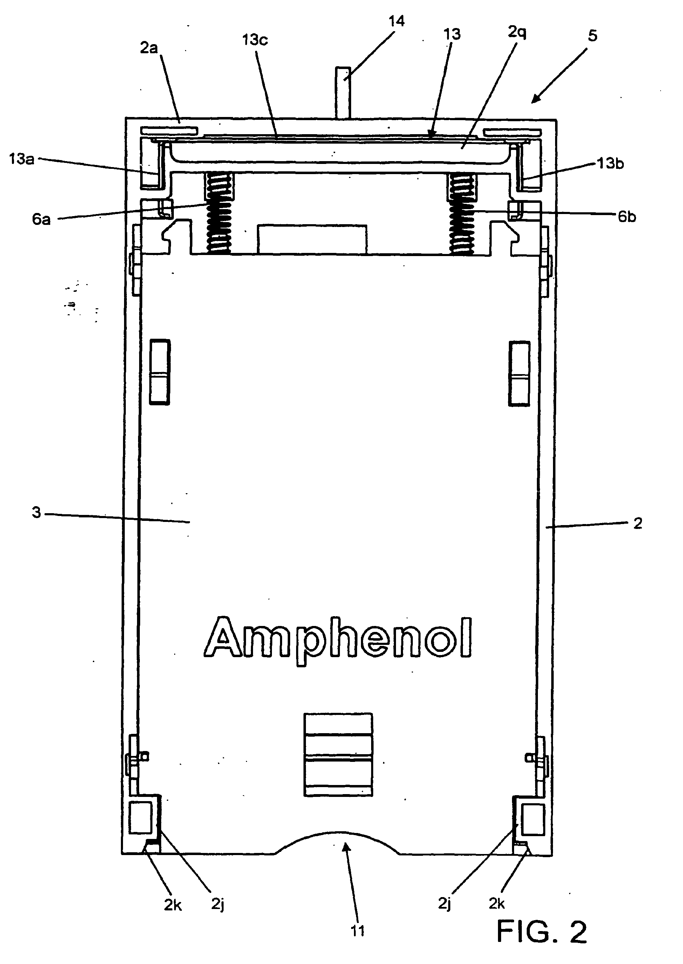

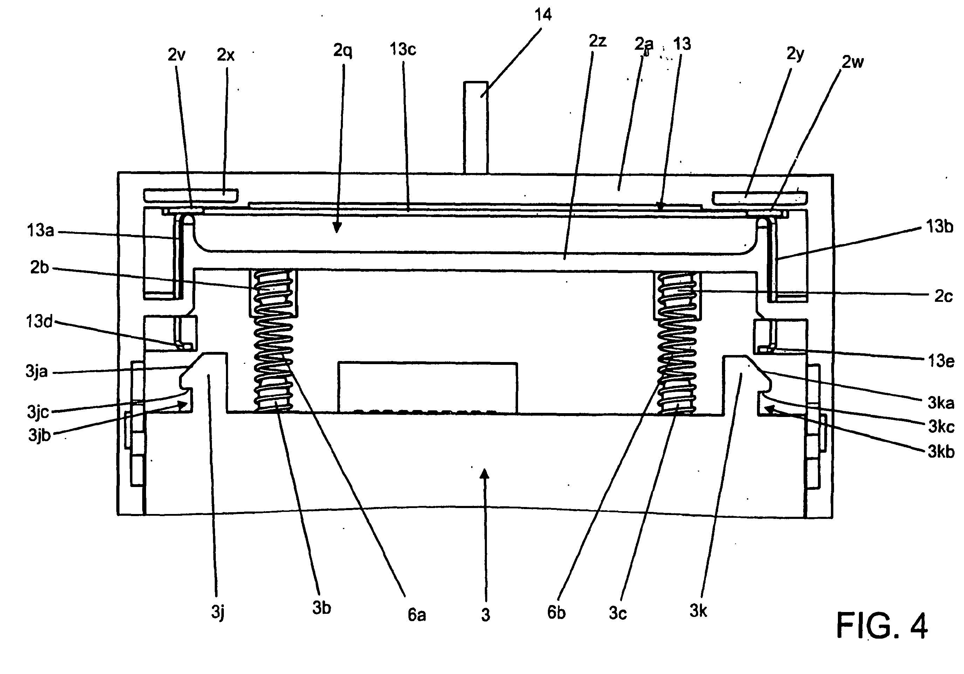

Fig. 1 zeigt den erfindungsgemäßen Chipkartenleser 1 von unten in einer Auslöseposition. Eine Chipkarte 4 ist in den Chipkartenleser 1 eingelegt. Der Schlitten 3 befindet sich in einer vollständig eingeschobenen Position, die im weiteren als Lesestellung bezeichnet wird, da in dieser Position ein Lesen der Chipkarte 4 möglich ist. Ein in den Fig. 4 bis 6 genauer zu sehender Verriegelungsmechanismus 5 ist betätigt, so daß der Schlitten 3 zur Bewegung in eine Ein-/Ausgabeposition, wie sie in Fig. 2 dargestellt ist, freigegeben ist. Vorzugsweise ist der Schlitten 3 durch Federmittel für eine Bewegung in die Ein-/Ausgabeposition vorgespannt. Im gezeigten Ausführungsbeispiel bestehen die Federmittel aus zwei Schraubenfedern 6a, 6b, die zwischen einer Stirnseite 3a des Schlittens 3 und einer hinteren Seite oder Endwand 2a des Kontaktträgers 2 angeordnet sind. Die Schraubenfedern 6a, 6b werden dadurch gehalten und geführt, daß sich in jede Schraubenfeder 6a, 6b jeweils ein Ansatz 3b, 3c des Schlittens 3 und ein Ansatz 2b, 2c des Kontaktträgers 2 erstreckt. Natürlich wäre es möglich, nur eine Schraubenfeder oder auch andere Arten von Federmitteln zum Vorspannen des Schlittens 3 zu verwenden. Auch sind die Federmittel nicht unbedingt notwendig. Beispielsweise könnte der Schlitten 3 ohne Vorspannung manuell oder motorisch bewegt werden.

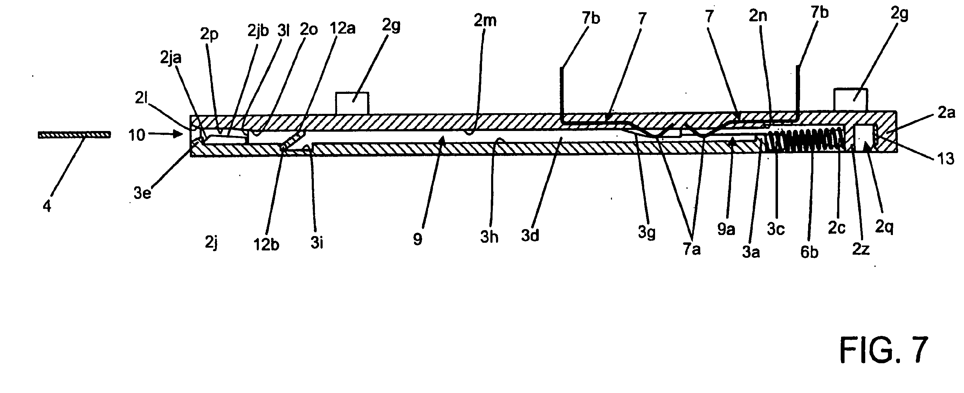

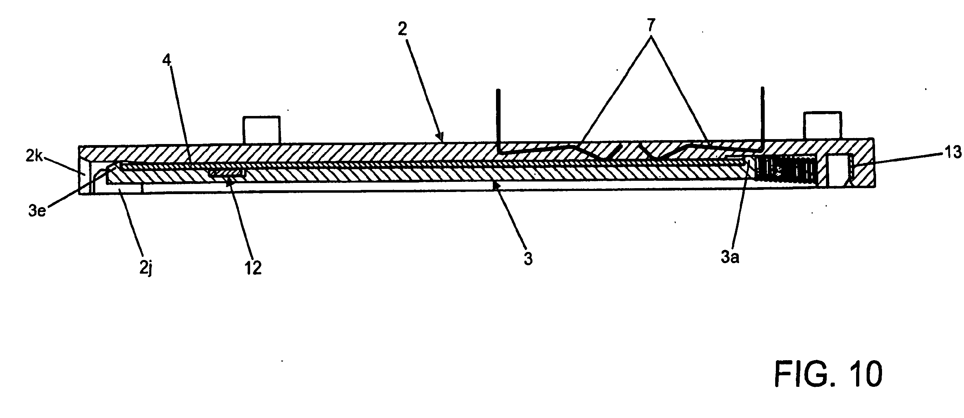

Wie insbesondere in den Figuren 7 bis 10 erkennbar ist, wird der Schlitten 3 bei seiner Bewegung zwischen der Ein-/Ausgabeposition (Fig. 7) und der Lesestellung (Fig. 10) angehoben. Dazu weist der Schlitten 3 an Längsseitenwänden, von denen in den Figuren nur eine zu sehen ist und mit dem Bezugszeichen 3d versehen ist, jeweils zwei seitlich nach außen vorstehende Zapfen 3f auf, die in entsprechenden Ausnehmungen 2d des Kontaktträgers 2 geführt sind. Die Ausnehmungen 2d bestehen im wesentlichen aus zwei Abschnitten 2e und 2f. Der äußere Abschnitt 2e ist definiert durch einen von außen und oben weggeschnittenen Bereich mit im wesentlichen senkrechten Seitenwänden 2ea und einer dazwischenliegenden Bodenwand 2eb. Die Bodenwand 2eb besteht aus drei Abschnitten, nämlich einem ersten ebenen Abschnitt 2ec, einem zweiten, höhergelegenen ebenen Abschnitt 2ed und einer dazwischenliegenden Rampe 2ee. Der innere Abschnitt 2f der Ausnehmung 2d ist definiert durch einen von innen und unten weggeschnittenen Bereich mit im wesentlichen senkrechten Seitenwänden 2fa und einer dazwischenliegenden Deckenwand 2fb. Die Deckenwand 2fb besteht aus drei Abschnitten, nämlich einem ersten ebenen Abschnitt 2fc, einem zweiten, höhergelegenen ebenen Abschnitt 2fd und einer dazwischenliegenden Rampe 2fe.

Die Zapfen 3f sind zwischen der Bodenwand 2eb und der Deckenwand 2fb geführt. Bei einer Längsverschiebung des Schlittens 3 bewirken die Rampen 2ee ein Anheben des Schlittens 3, wohingegen die Rampen 2fe bei umgekehrter Bewegung des Schlittens 3 ein Absenken des Schlittens 3 bewirken. Vorzugsweise bleibt der Schlitten 3 bei dieser Bewegung parallel zu seiner Hauptebene, d. h. die Hauptebene des Schlittens 3 in der Ein-/Ausgabeposition ist parallel zu der Hauptebene des Schlittens 3 in der Lesestellung.

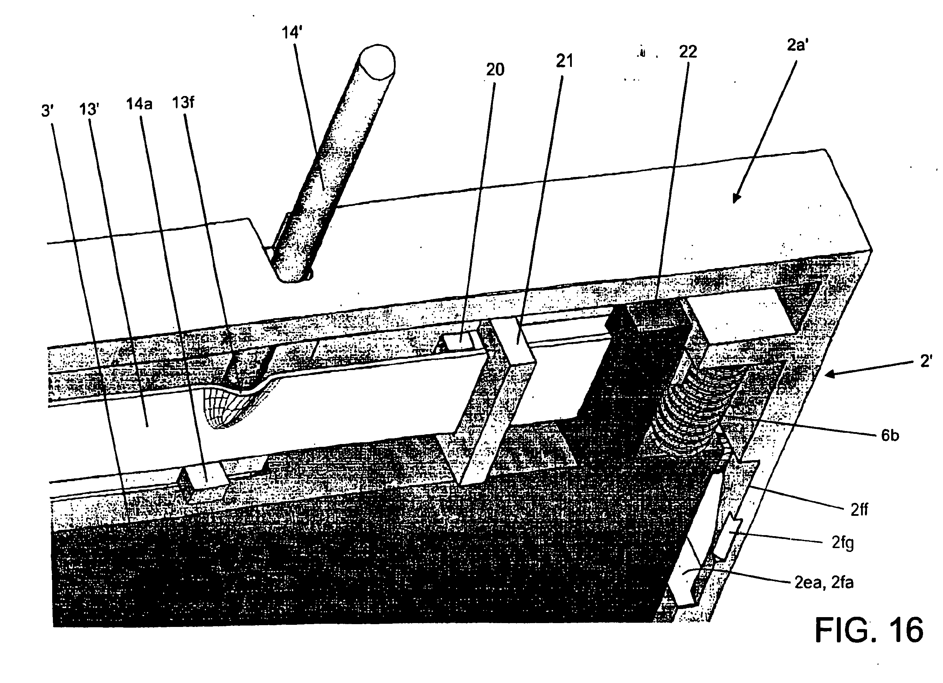

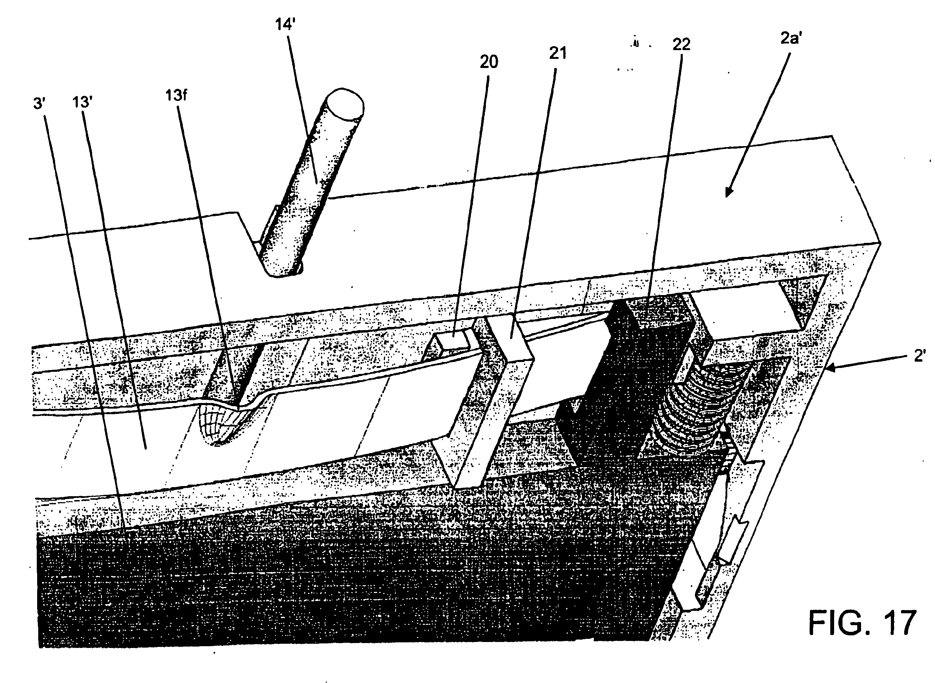

Zum leichteren Einsetzen des Schlittens 3 in den Kontaktträger 2 sind an einer unteren Längskante 2ff des inneren Abschnitts 2f der Ausnehmung 2d im Kontaktträger 2 ein abgeschrägter oder gefaster Bereich 2fg vorgesehen, wie insbesondere auch in Fig. 16 und 17 deutlich erkennbar ist. Entsprechend sind auch die Zapfen 3f vorzugsweise außen oben angeschrägt. Der Kontaktträger 2 und der Schlitten 3 bestehen vorzugsweise aus einem ausreichend elastischen Material, um ein Einsetzen des Schlittens 3 in den Kontaktträger 2 zu gestatten, indem die Zapfen 3f in die Ausnehmungen 2d einschnappen. Beispielsweise sind der Kontaktträger 2 und der Schlitten 3 aus Kunststoffspritzguß gefertigt.

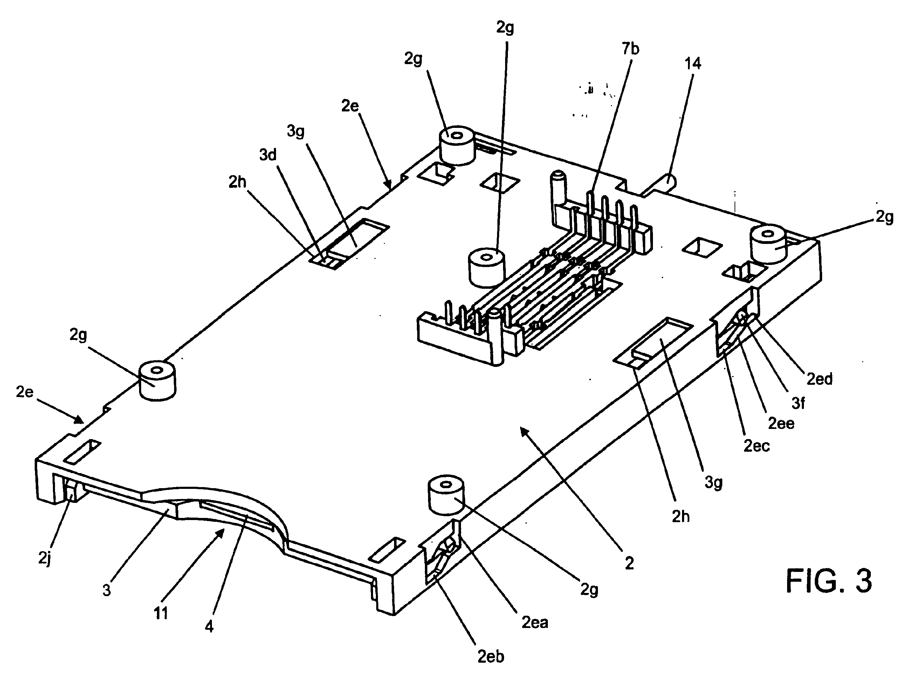

In den Kontaktträger 2 sind Kontaktelemente 7 zur Kontaktierung von Kontaktflächen auf der Chipkarte 4 eingesetzt oder eingespritzt. Vorzugsweise sind die Kontaktelemente 7 vorgespannt, um einen ausreichenden Kontaktdruck an vorstehenden Kontaktkuppen 7a zu erreichen. Die Kontaktelemente 7 können auf verschiedene Art und Weise mit einer Verarbeitungselektronik verbunden sein. Vorzugsweise ist der Chipkartenleser 1 jedoch zum direkten Aufbau auf eine gedrückte Leiterplatte oder Platine (nicht gezeigt) vorgesehen. In diesem Fall weisen die Kontaktelemente 7 vorstehende Lötfahnen oder Lötpins 7b auf, die direkt mit der Leiterplatte verlötet werden können. Vorzugsweise weist der Chipkartenleser 1 bei dieser Bauart Mehrzahl von Abstandsdomen, vorzugsweise fünf Abstandsdome 2g am Kontaktträger 2 auf, damit zwischen Chipkartenleser 1 und der Platine Bauelemente angeordnet werden können bei gleichzeitiger Vibrationssicherheit des Chipkartenlesers 1. Weitere Abstandshalter und/oder Positionierungselemente können im Bereich der Lötfahnen 7b vorgesehen sein (vgl. Fig. 3).

Ferner ist, vorzugsweise neben den Kontaktelementen 7 ein Kartenanwesenheitsschalter 8 vorgesehen, welcher als Öffner oder als Schließer ausgebildet sein kann und durch die Chipkarte 4 betätigt wird.

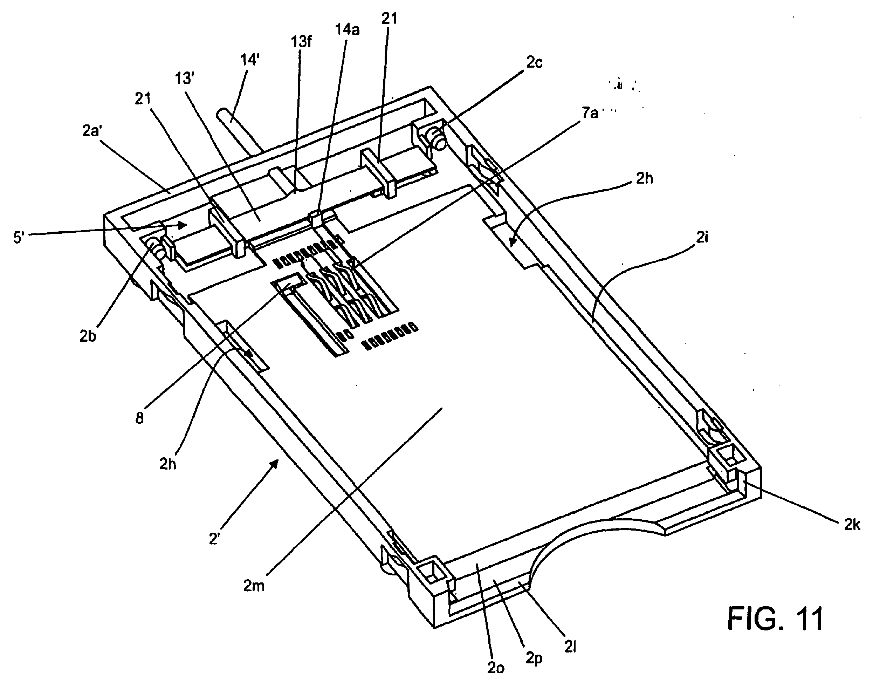

Der Kontaktträger 2 und der Schlitten 3 bilden einen Kartenschacht 9 zur Aufnahme der Chipkarte 4. Das vordere Ende des Kontaktträgers 2 ist offen und bildet eine Karteneinschuböffnung 10. In der Ein-/Ausgabeposition (vgl. Fig. 7) besitzt der Kartenschacht 9 eine größere Höhe als in der Leseposition, da der Schlitten 3 in der Leseposition angehoben ist. Der Schlitten 3 bildet durch vier Seitenwände (hintere Seitenwand 3a, Längsseitenwände 3d und vordere Seitenwand 3e) eine Kartenaufnahme 9a. Der Abstand zwischen der hinteren Seitenwand 3a und der vorderen Seitenwand 3e entspricht der Länge der Chipkarte 4, und der Abstand zwischen den Längsseitenwänden 3d entspricht der Breite der Chipkarte 4, so daß die Chipkarte 4 in allen seitlichen Richtungen fixiert ist, wenn sie im Schlitten 3 liegt. Die Seitenwand 3a am hinteren Ende des Schlittens 3 besitzt vorzugsweise eine Höhe von mindestens der Kartendicke der Chipkarte 4, um einen sicheren Anschlag für die Chipkarte 4 beim Einschieben derselben zu bieten. Die Seitenwände 3d haben eine unterschiedliche Höhe über ihre Länge hinweg. Benachbart zur hinteren Seitenwand 3a ist die Höhe der Seitenwände 3d vorzugsweise gleich der Höhe der hinteren Seitenwand 3a. Anschließend ist ein Abschnitt der Seitenwände 3d mit vergrößerter Höhe vorgesehen, welcher in einer Nut oder Vertiefung 2i (siehe Fig. 11) im Kontaktträger 2 geführt ist. Die Tiefe der Nut 2i ist etwas größer als der Hub des Schlittens 3 zwischen der Ein-/Ausgabeposition und der Leseposition, um stets eine Führung des Schlittens 3 durch die Seitenwände 3d zu gewährleisten.

In einem Bereich, der in der Ein-/Ausgabeposition des Schlittens 3 im Bereich unmittelbar vor den Kontaktkuppen 7a der Kontaktelemente 7 liegt und in den Abschnitt der Seitenwände 3d mit vergrößerter Höhe fällt, ist an beiden Längsseitenwänden 3d eine Kartenzwangsführung in Form einer Rampe 3g vorgesehen. Die Rampen 3g sind auf der jeweiligen Längsseitenwand 3d angebracht und ragen in die Kartenaufnahme 9a, um die Chipkarte 4 beim Einführen derselben in den Kartenschacht 9 an den in den Kartenschacht 9 ragenden Kontaktkuppen 7a der Kontaktelemente 7 vorbeizuführen. Dadurch wird ein Schleifkontakt zwischen Kontaktelementen 7 und Chipkarte 4 vermieden. Beim Verschieben des Schlittens 3 in die Leseposition bewegen sich die Rampen 3g aufgrund der Anhebung des Schlittens 3 in entsprechende Ausnehmungen 2h im Kontaktträger 2, so daß die Rampen 3g aus dem Kartenschacht 9 entfernt werden und die Chipkarte 4 mit den Kontaktelementen 7 in Kontakt kommen kann. Die Längsseitenwände 3d enden ein gewisses Stück vor dem Vorderende des Schlittens 3 und bilden einen Anschlag 31, der in der Ein-/Ausgabeposition gegen eine am Kontaktträger vorgesehene Kartenführung 2j anstößt, um eine weitere Bewegung des Schlittens 3 aus dem Kontaktträger 2 über die Ein-/Ausgabeposition hinaus zu verhindern. Am Vorderende des Schlittens 3 ist eine vordere Seitenwand 3e vorgesehen, die sich mit Ausnahme einer Griffmulde 11 über die gesamte Breite des Kartenschachts erstreckt und dadurch eine integrierte Kartensperre bildet. Um ein Einführen der Chipkarte 4 in der Ein-/Ausgabeposition zu erleichtern, ist die Oberseite der vorderen Seitenwand 3e vorzugsweise nach außen hin abgeschrägt.

Ähnliche Schrägen zur Erleichterung der Einführung der Chipkarte in der Ein-/Ausgabeposition sind an der Karteneinschuböffnung 10 des Kontaktträgers 2 vorgesehen. Insbesondere sind seitliche Schrägen 2k an den Seitenwänden des Kontaktträgers 2 und eine weitere Schräge 2l an der Hauptwand des Kontaktträgers 2 vorgesehen. Benachbart zu den seitlichen Schrägen 2k sind an den Seitenwänden des Kontaktträgers 2 die Kartenführungen 2j angeordnet, die in den Kartenschacht ragen und die Chipkarte 4 an der Oberfläche des Hauptkörpers des Kähtaktträgers entlang führen. Die Kartenführungen 2j weisen jeweils eine zur Karteneinschuböffnung 10 hin gerichtete, relativ steile Schräge 2ja und eine zum hinteren Ende des Chipkartenlesers 1 hin abfallende, relativ flache Schräge 2jb auf. Die lichte Weite zwischen den Kartenführungen 2j beträgt etwas weniger als die Breite der Chipkarte 4, so daß die Chipkarte 4 beim Einschieben in den Chipkartenleser 1 zuverlässig von den Kartenführungen 2j geführt wird.

Wie in Fig. 11 deutlich zu sehen ist, weist der Kontaktträger 2 eine ebene Auflagefläche 2m für die Chipkarte 4 auf. Die Auflagefläche wird seitlich von den Nuten 2i begrenzt. In Längsrichtung ist die Auflagefläche 2m im hinteren Bereich des Kontaktträgers 2 (nahe dem Verriegelungsmechanismus 5) durch einen Absatz 2n und im vorderen Bereich (nahe der Karteneinschuböffnung 10) durch eine Schräge 2o begrenzt. Die Länge der Auflagefläche 2m zwischen dem Absatz 2n und der Schräge 2o ist etwas geringer als die Länge der Chipkarte 4. In der Lesestellung (vgl. Fig. 10) liegt die Chipkarte 4 somit flächig auf der Auflagefläche 2m auf und liegt flach zwischen der Auflagefläche 2m des Kontaktträgers 2 und der Auflagefläche 3h des Schlittens 3. Dadurch werden mögliche Wölbungen der Chipkarte 4 ausgeglichen und die Chipkarte 4 liegt flach. Es sei bemerkt, daß die Seitenwände des Schlittens 3 dabei keine Begrenzung für die Aufwärtsbewegung des Schlittens 3 bilden. Die Seitenwände 3d haben ausreichend Platz in der Nut 2i; die hintere Seitenwand 3a liegt in dem durch den Absatz 2n geschaffenen Raum; und die vordere Seitenwand 3e liegt in dem durch die Schräge 2o geschaffenen Raum.

Die Schräge 2o ist ähnlich geneigt wie die hintere Schräge 2jb der Kartenführungen 2j und ist etwa genauso lang wie diese. Zwischen der Schräge 2l an der Karteneinschuböffnung 10 und der Schräge 2o liegt eine ebene Fläche 2p. Die Schräge 2l, die ebene Fläche 2p und die Schräge 2o nehmen zusammen nur einen geringen Teil der Gesamttiefe des Kartenschachts 9 ein. Die Abmessung der ebenen Fläche 2p in Karteneinschubrichtung entspricht etwa dem Betrag der Längsverschiebung des Schlittens 3 zwischen der Ein-/Ausgabeposition und der Lesestellung.

In einem Bereich nahe der Karteneinschuböffnung 10 weist der Schlitten 3 eine Schmutzsperre 12 auf. Die Schmutzsperre 12 ist im wesentlichen eine Klappe 12a, die um eine Schwenkachse 12b herum geschwenkt werden kann. Der Schlitten 3 weist eine Ausnehmung oder Vertiefung 3i auf, in der die Klappe 12a aufgenommen werden kann. Beispielsweise könnte die Klappe 12a anhand von Zapfen zur Drehung um die Schwenkachse 12b angebracht sein, wobei diese Zapfen in entsprechenden seitlichen Löchern am jeweiligen seitlichen Ende der Ausnehmung 3i im Schlitten 3 gelagert wären. Andere Befestigungsarten, beispielsweise mittels einer Achse, sind möglich. In der Ein-/Ausgabeposition und ohne eingelegte Chipkarte (vgl. Fig. 7) ist die Schmutzsperre 12 anhand eines nicht gezeigten Federelements in eine Schließstellung vorgespannt, in der die Klappe 12a den Kartenschacht 9 verschließt, um ein Eindringen von Schmutzpartikeln oder Staub in den Kartenschacht 9 zu verhindern. Beim Einlegen der Chipkarte 4 wird die Klappe 12a entgegen der Vorspannung um die Schwenkachse 12b in die Ausnehmung 3i geschwenkt und gestattet das Einführen der Chipkarte 4. Gleichzeitig werden möglicherweise an der Chipkarte 4 anhaftende Schmutzpartikel oder Staub abgewischt, so daß die Klappe 12a als Schmutzabweiser wirkt. Es wird erwogen, daß eine entsprechende Schmutzsperre am Kontaktträger 2 vorgesehen ist, und zwar entweder anstatt der Schmutzsperre 12 am Schlitten 3 oder zusätzlich dazu.

Der Verriegelungsmechanismus 5 ist erfindungsgemäß zweiseitig vorgesehen, d. h. an zwei Stellen entgegengesetzt angreifend. Dies bedeutet, daß der Verriegelungsmechanismus 5 unanfällig gegen Schläge, Stöße und Erschütterungen ist und auch dann den Schlitten 3 zuverlässig im Chipkartenleser 1 verriegelt, wenn Schläge oder Stöße auf den Chipkartenleser 1 den Verriegelungsmechanismus 5 aufgrund von Trägheitskräften einseitig lösen sollten. Dieselben Trägheitskräfte würden in diesem Fall auf der anderen Seite die Verriegelung umso zuverlässiger sperren.

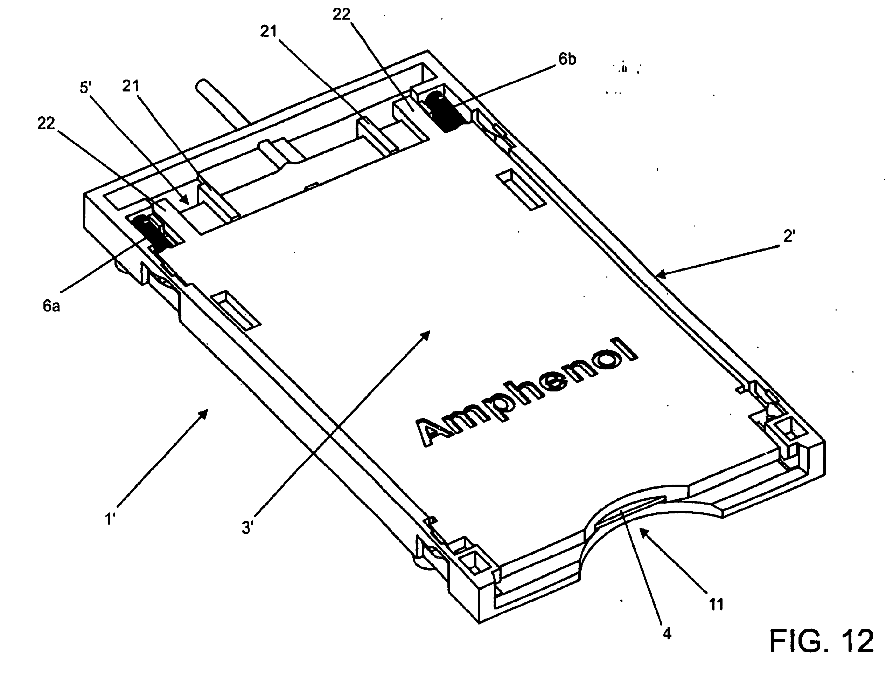

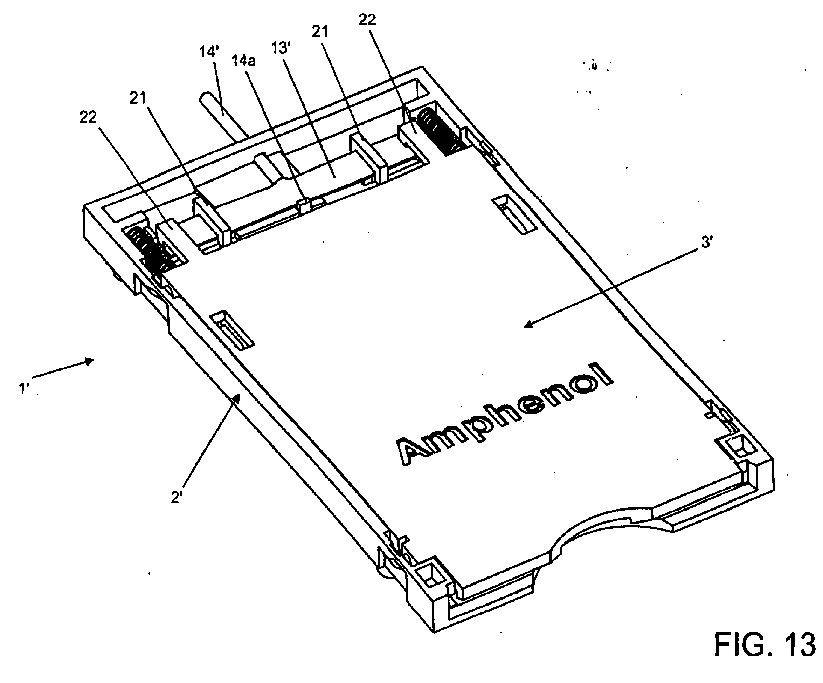

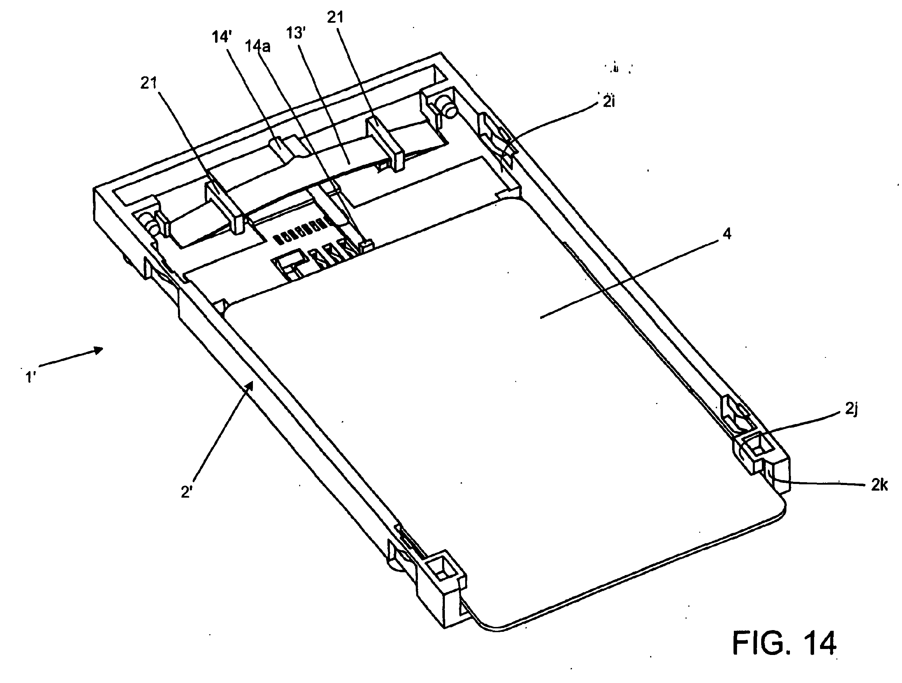

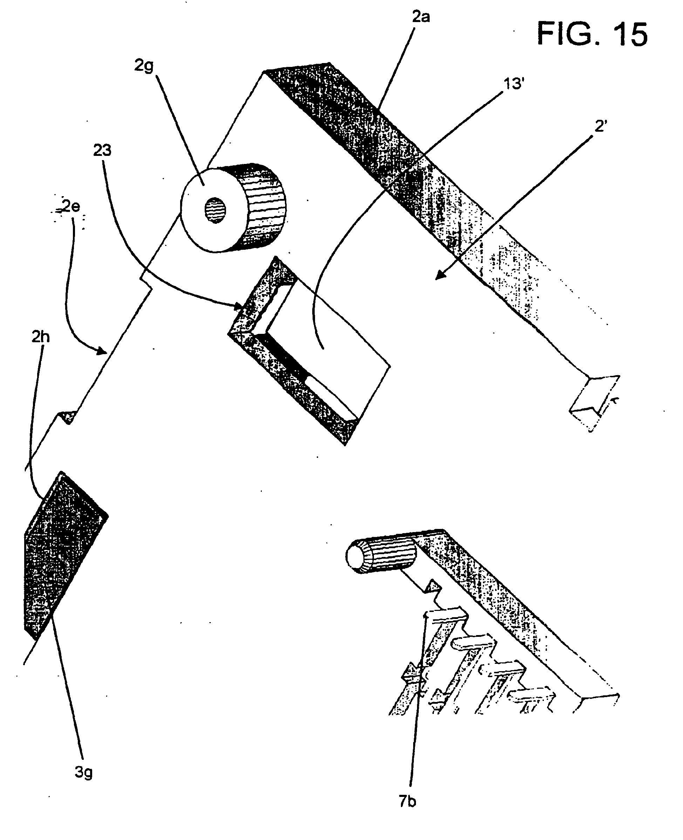

Im einzelnen sind in der vorliegenden Anmeldung zwei Ausführungsbeispiele für einen zweiseitigen Verriegelungsmechanismus gezeigt. Das erste Ausführungsbeispiel ist in den Fig. 1 bis 10 dargestellt, das zweite Ausführungsbeispiel ist in den Fig. 11 bis 17 gezeigt. Andere Konstruktionen des Verriegelungsmechanismus' sind möglich und liegen im Bereich des handwerklichen Könnens eines Fachmanns.

Zunächst wird der Verriegelungsmechanismus 5 gemäß dem ersten Ausführungsbeispiel beschrieben. Der Verriegelungsmechanismus 5 weist ein im wesentlichen U-förmiges Blattfederelement 13 auf. Das Federelement 13 besitzt zwei seitliche Schenkel 13a, 13b mit einem dazwischenliegenden Abschnitt 13c. An den äußeren Enden der Schenkel 13a, 13b sind jeweils nach innen ragende Haken oder Flansche 13d, 13e vorgesehen. In der Ruheposition des Verriegelungsmechanismus' 5 ist der Abschnitt 13c im wesentlichen gerade und die Schenkel 13a, 13b liegen im wesentlichen senkrecht dazu. Das Blattfederelement 13 bildet somit eine Haltefeder mit zwei spiegelsymmetrisch angeordneten Rasthaken.

An der Stirnwand 3a des Schlittens 3 sind entsprechende Haken 3j, 3k vorgesehen. Die Haken 3j, 3k weisen außen seitlich vorn jeweils eine Schräge 3ja, 3ka auf, die in der Ruheposition des Verriegelungsmechanismus' 5 und bei Bewegung des Schlittens aus der Ein-/Ausgabeposition in die Lesestellung als Rampe für die Haken 13d, 13e wirkt, wodurch sich das Blattfederelement 13 elastisch verformt, bevor die Haken 13d, 13e in eine Ausnehmung 3jb, 3jc einschnappen und durch Anliegen an einer Schulter 3jc, 3kc der Haken 3j, 3k den Schlitten 3 in der Lesestellung verriegeln.

Das Blattfederelement 13 ist in einer im wesentlichen U-förmigen Nut 2q im Kontaktträger 2 aufgenommen. Durch zwei am Kontaktträger ausgebildete Stege 2r, 2s ist das Blattfederelement 13 in der Nut 2q fixiert. Die Stege 2r, 2s bilden fixierte Drehpunkte oder Lagerstellen für eine elastische Verformung des Blattfederelements 13. Die Drehpunkte oder Lagerstellen befinden sich am Abschnitt 13c des Blattfederelements 13 benachbart zu den Schenkeln 13a, 13b. Die Nut 2q ist ausreichend groß bemessen, so daß eine elastische Verformung des Blattfederelements 13 darin möglich ist. Das Blattfederelement 13 ist in der Nut 2q gehalten, zum einen durch Querstege 2t, 2u, die sich im Bereich der Schenkel 13a, 13b über die Nut 2q hinweg erstrecken, und zum anderen durch Rastvorsprünge 2v, 2w, die im Bereich der Stege 2r, 2s an der hinteren Endwand 2a des Kontaktträgers 2 vorgesehen sind. In der Endwand 2a sind im Bereich der Rastvorsprünge 2v, 2w jeweilige Ausnehmungen 2x, 2y vorhanden, die beim Einsetzen des Blattfederelements 13 ein Auslenken der Rastvorsprünge 2v, 2w durch elastische Verformung des Teils der Endwand zwischen den Rastvorsprüngen 2v, 2w und den Ausnehmungen 2x, 2y gestatten. Parallel zur Endwand 2a verläuft zwischen den Stegen 2r und 2s ein Steg 2z, der die Nut 2q begrenzt und an dem die Ansätze 2b, 2c angebracht oder ausgebildet sind.

In der Ruheposition des Verriegelungsmechanismus' 5 liegt der Abschnitt 13c im wesentlichen an der Endwand 2a an und liegt parallel dazu. Eine Durchbiegung des Abschnitts 13c des Blattfederelements 13 in Richtung zum Steg 2z hin, oder anders ausgedrückt zum Schlitten 3 oder Kartenschacht 9 hin, bewirkt ein Spreizen der Schenkel 13a, 13b nach außen. Dies wird als Betätigung des Verriegelungsmechanismus' 5 oder Auslöseposition bezeichnet und ist in Fig. 1 dargestellt. In der Auslöseposition sind die Haken 13d, 13e durch das Spreizen der Schenkel 13a, 13b so weit nach außen bewegt, daß die Haken 3j, 3k des Schlittens 3 freigegeben sind.

Zur Betätigung des Verriegelungsmechanismus' 5 ist ein Bolzen oder Stößel 14 vorgesehen, welcher von hinten in den Chipkartenleser 1 ragt und etwa auf die Mitte des Abschnitts 13c des Blattfederelements 13 einwirken kann, um dessen Durchbiegung zu bewirken. Allgemein kann der Bolzen 14 als externes Druckelement zum Auslösen oder zur Betätigung des Verriegelungsmechanismus' bezeichnet werden. Der Bolzen 14 kann beispielsweise von einem Elektromagneten betrieben oder betätigt werden, welcher in geeigneter Weise vor unbefugter Betätigung geschützt ist und nur durch autorisierte Personen betätigt werden kann, beispielsweise anhand eines mechanischen oder elektronischen Schlosses. Dadurch kann eine Manipulation des Chipkartenlesers 1 und insbesondere eine unbefugte Entnahme der Chipkarte 4 weitestgehend ausgeschlossen werden.

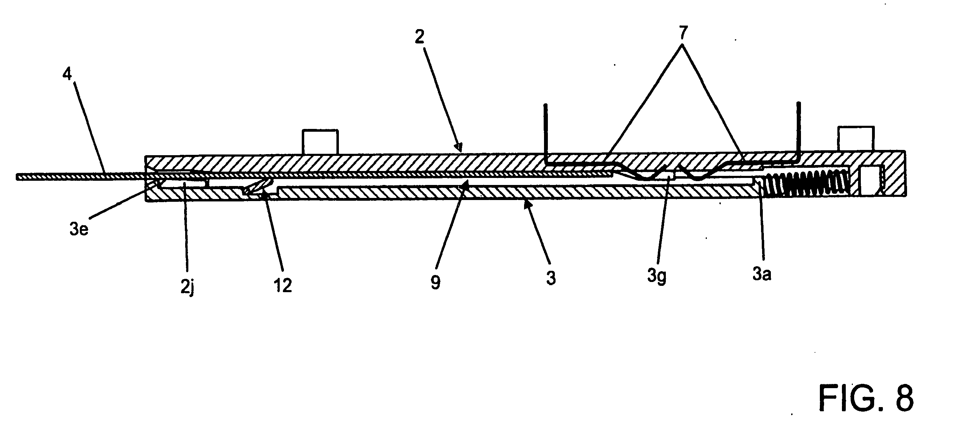

Wie aus den Fig. 7 bis 10 am besten ersichtlich ist, wird beim Einlegen der Chipkarte 4 in den Chipkartenleser 1 die Chipkarte 4 zunächst durch die Schrägen 2k und 2l am Kontaktträger 2 sowie die abgeschrägte vordere Seitenwand 3e des Schlittens 3 in die Karteneinschuböffnung 9 geführt. Die Chipkarte 4 läuft anschließend auf die vorderen Schrägen 2ja der seitlichen Kartenführungen 2j und wird zwischen den hinteren Schrägen 2jb der Kartenführungen 2j und der ebenen Fläche 2p und der anschließenden Schräge 2o geführt. Die Vorderkante der Chipkarte 4 erreicht die Auflagefläche 2m des Kontaktträgers 2 und bewegt sich an dieser entlang. Dabei wird die Schmutzsperre 11 geöffnet und gegebenenfalls von der Chipkarte 4 abgewischt. Diese erste Zwischenposition ist in Fig. 8 gezeigt.

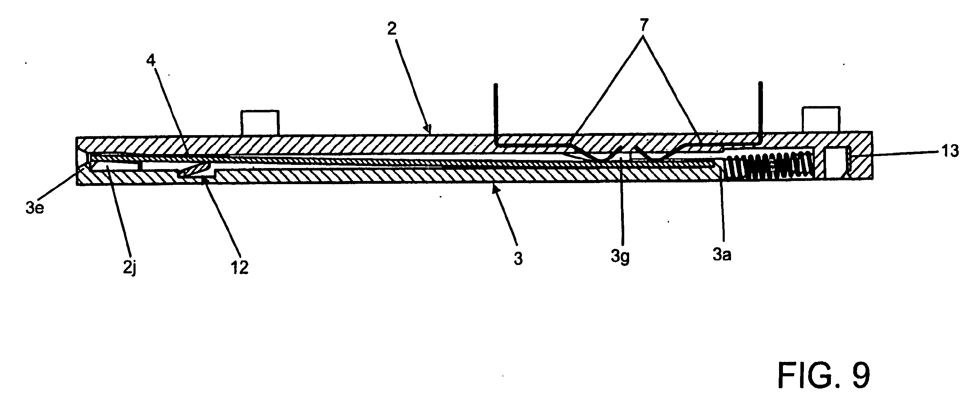

Die Vorderkante der Chipkarte 4 erreicht die Rampe 3g des Schlittens 3 und die Chipkarte 4 läuft auf die Rampe 3g auf, um einen vorzeitigen Kontakt mit den Kontaktkuppen 7a der Kontaktelemente 7 zu vermeiden. Dadurch wird der (in Einschubrichtung) vordere Teil der Chipkarte 4 auf den Schlitten 3 bewegt und kommt in Kontakt mit der Auflagefläche 3h des Schlittens 3. Eine weitere Bewegung der Chipkarte 4 in den Kartenschacht 9 des Chipkartenlesers 1 hinein bewirkt, daß die Vorderkante der Chipkarte 4 mit der hinteren Endwand 3a des Schlittens 3 in Kontakt kommt, so daß die Chipkarte 4 bei einer weiteren Bewegung den Schlitten 3 mitnimmt. Diese zweite Zwischenposition ist in Fig. 9 gezeigt.

Nun bewegen sich die Chipkarte 4 und der Schlitten 3 gemeinsam im Kontaktträger 2 zum dessen hinterem Ende hin. Dabei wird der Schlitten 3 angehoben bzw. zur Auflagefläche 2m des Kontaktträgers 2 hin bewegt, bis die Chipkarte 4 sowohl auf der Auflagefläche 3h des Schlittens 3 als auch auf der Auflagefläche 2m des Kontaktträgers 2 flach aufliegt. Dabei werden die Kontaktelemente 7 ausgelenkt, um ausreichenden Kontaktdruck auf entsprechende Kontaktflächen auf der Chipkarte 4 auszuüben.

Kurz vor dem Erreichen der Leseposition kommen die Schrägen 3ja, 3ka in Kontakt mit den Haken 13d, 13e. Die Haken 13d, 13e laufen auf die Schrägen 3ja, 3ka auf und schnappen bei Erreichen der Leseposition (Endposition) in die Ausnehmungen 3jb, 3kb, so daß sie den Schlitten 3 an den Schultern 3jc, 3kc gegen eine Bewegung zurück in die Ein-/Ausgabeposition halten. Diese Position wird auch als Verrastposition bezeichnet. Während der Bewegung des Schlittens 3 von der Ein-/Ausgabeposition in die Leseposition werden die Federn 6a, 6b zusammengedrückt und spannen daher den Schlitten zu der Ein-/Ausgabeposition hin vor.

In der Verrastposition oder Lesestellung liegt die Chipkarte 4 hinter der vorderen Seitenwand 3e des Schlittens 3. Die vordere Seitenwand 3e des Schlittens 3 liegt an dem Kontaktträger 2 an (im Bereich der ebenen Fläche 2p oder der Schräge 2o) und bildet daher eine integrierte Kartensperre. Dadurch ist die Chipkarte 4 sicher gegen eine Entnahme im Schlitten 3 gehalten. Es ist nicht möglich, die Chipkarte 4 aus den Chipkartenleser 1 zu entfernen, ohne den Schlitten 3 aus der Lesestellung in die Ein-/Ausgabeposition zu bringen. Dazu aber ist die Betätigung oder Auslösung des Verriegelungsmechanismus' 5 notwendig.

Zum Auslösen des Verriegelungsmechanismus' 5 wird der Bolzen 14 in den Chipkartenleser 1 gedrückt. Wie oben beschrieben wurde, werden dadurch die Schenkel 13a, 13b des Blattfederelements 13 gespreizt und geben den Schlitten 3 für eine Bewegung zur Ein-/Ausgabeposition hin frei. Diese Position wird auch als Auslöseposition bezeichnet.

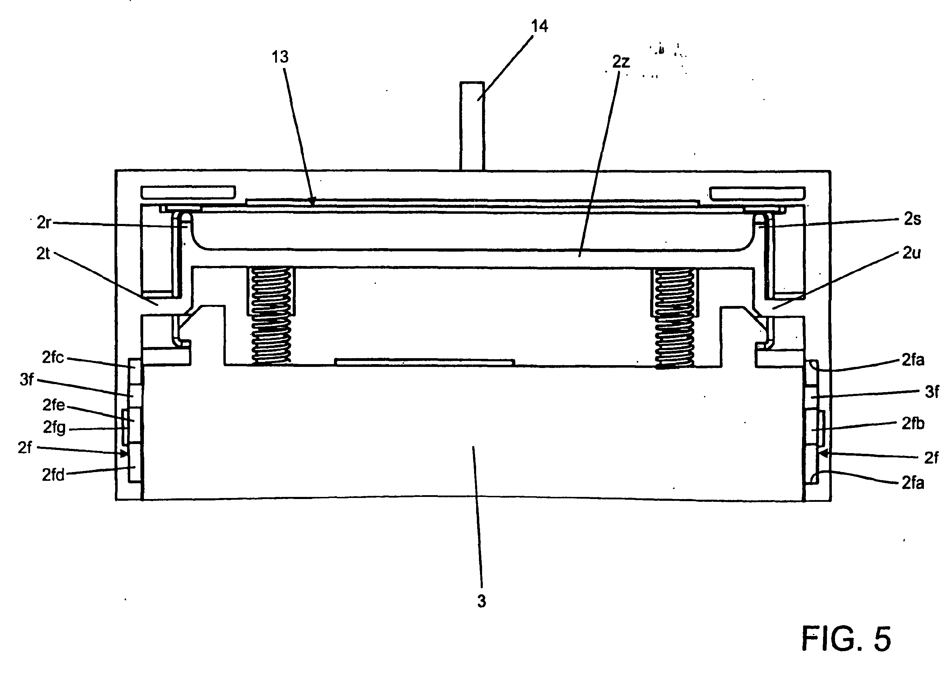

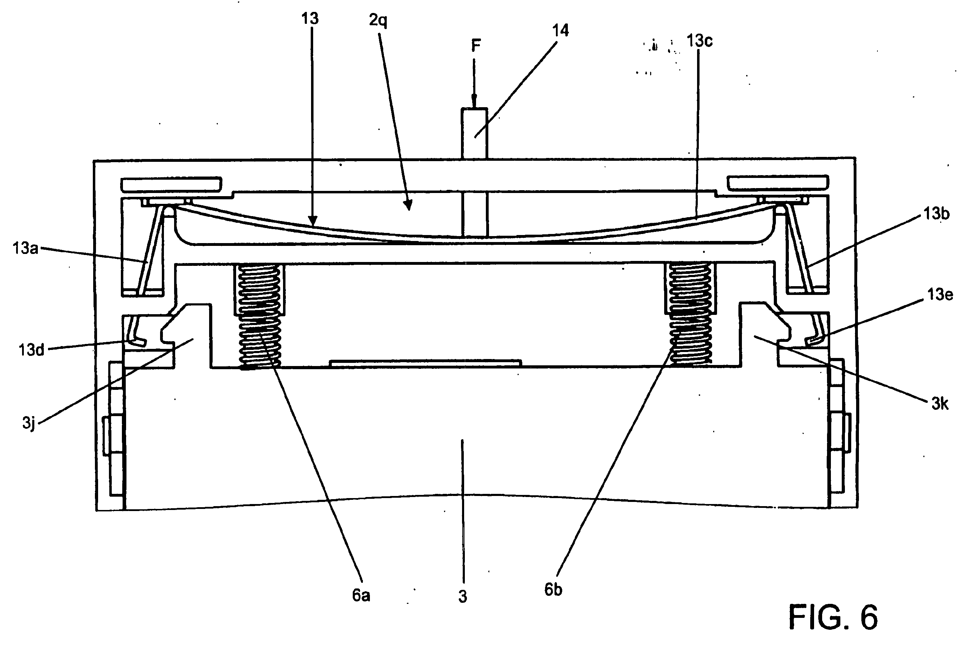

Der Schlitten 3 ist in der Verrastposition (Fig. 5) und in der Auslöseposition (Fig. 1 und 6) des Verriegelungsmechanismus' 5 in der gleichen Stellung, nämlich der Lesestellung, wie sie auch in Fig. 10 dargestellt ist.

Beim Auslösen oder Betätigen des Verriegelungsmechanismus' 5 wird die oben beschriebene Bewegung des Schlittens 3 umgekehrt. Aufgrund der Federwirkung der Schraubenfedern 6a, 6b wird der Schlitten 3 in Richtung zur Karteneinschuböffnung 10 hin bewegt und wird dabei abgesenkt. Die Chipkarte 4 wird durch die seitlichen Kartenführungen 2j aus dem Schlitten 3 gehoben und kann entnommen werden, insbesondere unter Ausnutzung der Griffmulde 11. Beim Entnehmen der Chipkarte 4 schließt die Schmutzsperre 12 den Kartenschacht 9.

Das zweite Ausführungsbeispiel der Erfindung, das in den Fig. 11-17 gezeigt ist, unterscheidet sich von dem in den Fig. 1-10 dargestellten ersten Ausführungsbeispiel hauptsächlich durch einen unterschiedlichen Verriegelungsmechanismus 5'. Der Verriegelungsmechanismus 5' weist ein gerades Blattfederelement 13' auf, das sich im wesentlichen parallel zur Endwand 2a' des Kontaktträgers 2' erstreckt. Im gezeigten Ausführungsbeispiel liegt das Blattfederelement 13' im Ruhezustand im wesentlichen eben und parallel zur Auflagefläche 2m des Kontaktträgers 2'. Das Blattfederelement 13' ist gehalten durch zwei Auflagen 20 sowie zwei außen danebenliegende Bügel 21, wobei die Auflagen 20 und die Bügel 21 vorzugsweise einstückig mit dem Kontaktträger 2' ausgebildet sind.

Ein Bolzen 14' ist in einem vorderen Bereich abgeflacht und erstreckt sich unter das Blattfederelement 13', ohne das Blattfederelement 13' auszulenken. In einem hinteren oder äußeren Bereich besitzt der Bolzen 14' einen größeren, vorzugsweise runden Querschnitt.

Der Schlitten 3' weist an seinem hinteren Ende zwei Rasthaken 22 auf. Die Rasthaken 22 bilden eine Nut oder Vertiefung 22a mit einer Schulter 22b. In der Verrastposition liegen die Enden des Blattfederelements 13' in der Vertiefung 22a der Rasthaken 22 und blockieren eine Bewegung des Schlittens 3'.

Bei Betätigung oder Auslösung des Verriegelungsmechanismus' 5' wird der Bolzen 14' in den Chipkartenleser 1' bewegt. Das Blattfederelement 13' reitet auf dem Bolzen 14' auf. Vorzugsweise ist in der Mitte des Blattfederelements 13' ein Anschrägung 13f vorgesehen, um das Aufreiten auf den Bolzen 14' zu erleichtern. Durch das Aufreiten auf den Bolzen 14' wird das Blattfederelement 13' durchgebogen. Dadurch bewegen sich die Enden des Blattfederelements 13' aus den Vertiefungen 22a der Rasthaken 22. Dies ist die Auslöseposition des Verriegelungsmechanismus' 5' des zweiten Ausführungsbeispiels. Dabei bilden die Auflagen 20 und Bügel 21 festgelegte Lagerpunkte für das Blattfederelement 13'. Um diese Bewegung zu ermöglichen, sind im Bereich der Enden des Blattfederelements 13' entsprechende Ausnehmungen 23 im Kontaktträger 2' ausgebildet, in die sich die Enden des Blattfederelements 13' bewegen kann. Wenn sich die Enden des Blattfederelements 13' aus den Vertiefungen 22a der Rasthaken 22 bewegen, wird der Schlitten 3' für eine Bewegung in die Ein-/Ausgabestellung freigegeben.

Der Bolzen oder Stößel 14' kann an seinem vorderen Ende einen vergrößerten Ansatz 14a aufweisen, der beim Auswurf der Chipkarte 4 aus dem Chipkartenleser 1' helfen kann.

## Patentansprüche

1. Chipkartenleser (1) mit einem Kontaktträger (2) und einem zwischen einer Ein-/Ausgabeposition und einer Lesestellung beweglichen Schlitten (3), wobei an einer Seite des Chipkartenlesers (1) eine Karteneinschuböffnung (10) vorgesehen ist und wobei zur Verriegelung des Schlittens (3) in der Leseposition ein Verriegelungsmechanismus (5) vorgesehen ist, welcher an einem der Karteneinschuböffnung (10) entgegengesetzten Ende des Chipkartenlesers (1) angeordnet ist, wobei der Verriegelungsmechanismus (5) durch ein externes Druckelement (14) in der Form eines Bolzens (14) lösbar oder betätigbar ist, welche im Chipkartenleser (1) bewegbar ist, **dadurch gekennzeichnet, dass** der Verriegelungsmechanismus (5) ein Blattfederelement (13) aufweist dessen Enden in Vertiefungen an dem beweglichen Schlitten (3) eingreifen, um diesen zu verriegeln und dass das Blattfederelement (13) durch den Bolzen (14) elastisch derart verbiegbar ist, dass die Verriegelung des beweglichen Schlittens gelöst wird.

2. Chipkartenleser (1) nach Anspruch 1, **dadurch gekennzeichnet, daß** der Verriegelungsmechanismus (5) nur vom der Karteneinschuböffnung (10) entgegengesetzten Ende des Chipkartenlesers (1) aus betätigbar ist.

3. Chipkartenleser (1) nach Anspruch 1 oder 2, **dadurch gekennzeichnet, daß** der Verriegelungsmechanismus (5) an zwei Stellen am Schlitten (3) angreift.

4. Chipkartenleser (1) nach Anspruch 3, **dadurch gekennzeichnet, dass** der Verriegelungsmechanismus (5) eine Haltefeder (13) mit zwei spiegelsymmetrisch angeordneten Rasthaken (13a, 13b, 13d, 13e) aufweist.

5. Chipkartenleser (1) nach Anspruch 3, **dadurch gekennzeichnet, daß** der Schlitten (3) geeignet ist, eine Chipkarte (4) im wesentlichen vollständig aufzunehmen, und **dadurch** in der Lesestellung eine integrierte Kartensperre bildet.

6. Chipkartenleser (1) nach einem der vorhergehenden Ansprüche, **dadurch gekennzeichnet, daß** der Schlitten (3) eine Kartenauflagefläche (3h) aufweist, wobei sich der Schlitten (3) bei einer Bewegung von der Ein-/Ausgabeposition in die Lesestellung sowohl in einer Richtung parallel zur Kartenauflagefläche (3h) als auch in einer Richtung senkrecht dazu bewegt.

7. Chipkartenleser (1) nach Anspruch 1, **dadurch gekennzeichnet, daß** der Bolzen (14) in Richtung zur Karteneinschuböffnung (10) hin in den Chipkartenleser (1) bewegbar ist.

8. Chipkartenleser (1) nach einem der vorhergehenden Ansprüche, **dadurch gekennzeichnet, dass** der Kontaktträger (2) im Bereich der Karteneinschuböffnung (10) eine Kartenführung (2j) zur Führung der Längsseitenkanten sowie die Hauptseiten der Chipkarte (4) aufweist.

9. Chipkartenleser (1) nach einem der vorhergehenden Ansprüche, **dadurch gekennzeichnet, dass** zwischen dem Kontaktträger (2) und dem Schlitten (3) ein Kartenschacht (9) gebildet ist, in den Kontaktkuppen (7a) von Kontaktelementen (7) ragen, wobei der Schlitten (3) eine Kartenzwangsführung in Form von mindestens einer Rampe (3g) aufweist, um die Chipkarte (4) beim Einführen derselben in den Kartenschacht (9) an den Kontaktkuppen (7a) vorbeizuführen.

10. Chipkartenleser (1) nach einem der vorhergehenden Ansprüche, **dadurch gekennzeichnet, dass** zwischen dem Kontaktträger (2) und dem Schlitten (3) ein Kartenschacht (9) gebildet ist, wobei der Chipkartenleser (1) in einem Bereich nahe der Karteneinschuböffnung (10) eine Schmutzsperre (12) aufweist, die im wesentlichen aus einer Klappe (12a) besteht, die um eine Schwenkachse (12b) herum in den Kartenschacht (9) schwenkbar ist, so dass die Klappe (12a) den Kartenschacht (9) verschließt, wobei beim Einlegen einer Chipkarte (4) die Klappe (12a) aus dem Kartenschacht (9) schwenkbar ist.

11. Chipkartenleser (1) nach einem der vorhergehenden Ansprüche, **dadurch gekennzeichnet, dass** der Kontaktträger (2) auf einer Leiterplatte angebracht ist, wobei der Kontaktträger (2) Abstandsdome (2g) aufweist, damit zwischen Chipkartenleser (1) und der Leiterplatte Bauelemente angeordnet werden können.

## Claims

1. A chip card reader (1) comprising a contact support (2) and a slider (3) movable between an input position/output position and a reading position, wherein at one side of the chip card reader (1) a card insert opening (10) is provided and wherein for locking the slider (3) in the reading position a locking mechanism (5) is provided, said locking mechanism being located at an end of the chip card reader (1) opposite to said card insert opening (10), and
wherein further said locking mechanism (5) can be released or actuated by means of an external pressure element (14) in the form of a bolt (14) movable within the chip card reader,
**characterized in that** the locking mechanism (5) comprises a leaf spring element (13) the ends of which engage with recesses at the movable slider (3) so as to lock said slider and wherein the leaf spring element (13) is resiliently deformable by means of the bolt (14) such that the locking of the movable slider is released.

2. Chip card reader (1) according to claim 1 **characterized in that** the locking mechanism (5) can only be actuated from the end of the chip card reader (1) which is opposite to the card insert opening (10) of the chip card reader (3).

3. Chip card reader (1) according to claim 1 or 2 **characterized in that** the locking mechanism (5) engages the slider (3) at two locations.

4. Chip card reader (1) according to claim 3, **characterized in that** the locking mechanism (5) comprises a holding spring (13) with two locking hooks (13a, 13b, 13d, 13e) arranged in a mirror-symmetric manner.

5. The chip card reader (1) according to claim 3, **characterized in that** the slider (3) is suitable to receive a chip card (4) in substance completely so as to form in the reading position an integrated card blocking means.

6. Chip card reader (1) according to one of the preceding claims,
**characterized in that** the slider (3) comprises a card support surface (3h), and wherein said slider (3) moves when moving from the input position/output position to the reading position both in a direction parallel to the card support surface (3h) as well as in a direction perpendicular thereto.

7. Chip card reader (1) according to claim 1, **characterized in that** the bolt (14) is movable in a direction towards the card insert opening (10) into the chip card reader (1).

8. Chip card reader (1) according to one of the preceding claims,
**characterized in that** the contact support (2) comprises in the area of the card insert opening (10) a card guide (2j) for guiding the longitudinal edges, as well as the main sides of the chip card (4).

9. Chip card reader (1) according to one of the preceding claims,
**characterized in that** between the contact support (2) and the slider (3) a card receiving space (9) is formed into which contact cusps (7a) of the contact elements (7) project, and wherein the slider (3) comprises positive card guide means in the form of at least one ramp (3g) so as to guide the chip card (4) along the contact cusps (7a) at the time the chip card (4) is inserted into the card space (9).

10. Chip card reader (1) according to one of the preceding claims,
**characterized in that** between the contact support (2) and the slider (3) a card space (9) is formed, and wherein the chip card reader comprises, in an area close to the card insert opening (10), a dirt blocking means (12), said dirt blocking means (12) comprising in substance a flap (12a) which is pivotal about a pivot axes (12b) into the card space such that the flap (12a) closes the card space (9), and wherein during an insertion of a chip card (4) the flap (12a) can be pivoted out of the card space (9).

11. Chip card reader (1) according to one of the preceding claims,
**characterized in that** the contact support (2) is mounted on a circuit board, wherein the contact support (2) comprises spacing domes (2g) so that between the chip card reader (11) and the circuit board components can be placed.

## Revendications

1. Lecteur de carte à puce (1) avec un support de contact (2) et un chariot (3), déplaçable entre une position d'insertion/extraction et une position de lecture, en un côté du lecteur de carte à puce (1) étant prévue une ouverture d'insertion de carte à puce (10) et, pour le verrouillage du chariot (3) à la position de lecture, étant prévu un mécanisme de verrouillage (5) qui est disposé sur une extrémité, opposée à l'ouverture d'insertion de carte (10), du lecteur de carte à puce (1), le mécanisme de verrouillage (5) apte à être déclenché ou actionné au moyen d'un élément de pressage (14) externe, ayant la forme d'un boulon (14), déplaçable dans le lecteur de carte à puce (1), **caractérisé en ce que** le mécanisme de verrouillage (5) comporte un élément formant ressort à lame (13) dont des extrémités s'engagent dans des cavités ménagées sur le chariot (3) mobile, pour verrouiller celui-ci, et **en ce que** l'élément formant ressort à lame (13) est apte à être fléchi élastiquement par le boulon (14), de manière à faire cesser le verrouillage du chariot mobile.

2. Lecteur de carte à puce (1) selon la revendication 1, **caractérisé en ce que** le mécanisme de verrouillage (5) est actionnable uniquement depuis l'extrémité, opposée à l'ouverture d'insertion de carte (10), du lecteur de carte à puce (1).

3. Lecteur de carte à puce (1) selon la revendication 1 ou 2, **caractérisé en ce que** le mécanisme de verrouillage (5) agit en deux emplacements sur le chariot (3).

4. Lecteur de carte à puce (1) selon la revendication 3, **caractérisé en ce que** le mécanisme de verrouillage (5) comprend un ressort de maintien (13) ayant deux crochets d'accrochage (13a, 13b, 13d, 13e) disposés de façon symétriquement spéculaire.

5. Lecteur de carte à puce (1) selon la revendication 3, **caractérisé en ce que** le chariot (3) convient pour recevoir une carte à puce (4) pratiquement complètement, et forme ainsi en position de lecture un verrou de carte intégré.

6. Lecteur de carte à puce (1) selon l'une des revendications précédentes, **caractérisé en ce que** le chariot (3) présente une face de pose de carte (3h), le chariot (3), lors d'un déplacement de la position d'insertion/extraction à la position de lecture, se déplaçant tant en une direction parallèle à la face de pose de carte (3h), qu'également dans une direction perpendiculaire à celle-ci.

7. Lecteur de carte à puce (1) selon la revendication 1, **caractérisé en ce que** le boulon (14) est déplaçable, dans le sens allant vers l'ouverture d'insertion de carte (10), dans le lecteur de carte à puce (1).

8. Lecteur de carte à puce (1) selon l'une des revendications précédentes, **caractérisé en ce que** le support de contact (2) présente, dans la zone de l'ouverture d'insertion de carte (10), un guidage de carte (2j) pour guider les bords latéraux longitudinaux, ainsi que les côtés principaux de la carte à puce (4).

9. Lecteur de carte à puce (1) selon l'une des revendications précédentes, **caractérisé en ce que**, entre le support de contact (2) et le chariot (3) est formé un puits à carte (9), dans lequel pénètrent des tétons de contact (7a) appartenant à des éléments de contact (7), le chariot (3) présentant un guidage forcé de carte ayant la forme d'au moins une rampe (3g), pour faire avancer la carte (4) lors de son insertion dans le puits à carte (9), sur les tétons de contact (7a).

10. Lecteur de carte à puce (1) selon l'une des revendications précédentes, **caractérisé en ce que**, entre le support de contact (2) et le chariot (3), est formé un puits à carte (9), le lecteur de carte à puce (1) présentant, dans une zone proche de l'ouverture d'insertion de carte (10), une barrière à souillures (12) formée essentiellement d'un volet (12a), apte à pivoter autour d'un axe de pivotement (12b), dans le puits à carte (9), de manière que le volet (12a) ferme le puits à carte (9), le volet (12a) étant apte à sortir du puits à carte (9) par pivotement, lors de l'insertion d'une carte à puce (4).

11. Lecteur de carte à puce (1) selon l'une des revendications précédentes, **caractérisé en ce que** le support de contact (2) est monté sur une plaquette à circuit imprimé, le support de contact (2) comportant des dômes d'espacement (2g), afin que des composants puissent être disposés, entre le lecteur de carte à puce (1) et la plaquette à circuit imprimé.
